# EUROPÄISCHE PATENTSCHRIFT

(11) **EP 3 642 099 B1**
(45) Veröffentlichungstag und Bekanntmachung des Hinweises auf die Patenterteilung: **11.08.2021**
(21) Anmeldenummer: 18731133.7
(22) Anmeldetag: 21.06.2018
(51) Int. Cl.: B62D 27/02, F16B 11/00, C09J 5/00

(54) **VERBINDUNG VON KAROSSERIEELEMENTEN IN KRAFTFAHRZEUGEN**
CONNECTION OF VEHICLE BODY ELEMENTS IN MOTOR VEHICLES
LIAISON D'ÉLÉMENTS DE CARROSSERIE DANS DES VÉHICULES AUTOMOBILES

(30) Priorität: 22.06.2017 EP 17177311
(43) Veröffentlichungstag der Anmeldung: 29.04.2020
(60) Teilanmeldung: 21161539.8
(73) Patentinhaber: Sika Technology AG, 6340 Baar (CH)
(72) Erfinder: MUNZINGER, Noah, 8047 Zürich (CH); SOUVAY, Denis, 67400 Illkirch-Graffenstaden (FR); RHEINEGGER, Urs, 8105 Regensdorf (CH)
(74) Vertreter: Sika Patent Attorneys
(86) Internationale Anmeldenummer: PCT/EP2018/066622
(87) Internationale Veröffentlichungsnummer: WO 2018/234477

(56) Entgegenhaltungen:
- WO-A1-03/047785
- DE-A1- 19 929 057
- US-A- 5 228 259
- US-A1- 2011 158 741

## Beschreibung

Die Erfindung betrifft ein System verbundener Karosserieelemente für Kraftfahrzeuge, sowie ein Verfahren zur Verbindung von Karosserieelementen in Kraftfahrzeugen.

Karosserieelemente, wie beispielsweise Extrusionsprofile, Gussteile oder Bleche, werden zur Verbindung häufig miteinander verklebt. Dabei kommen einerseits Klebstoffe zum Einsatz, welche als Klebstoffraupen auf ein erstes Element aufgebracht werden, wobei ein zweites zu verklebendes Element danach auf diese Klebstoffraupe aufgebracht wird zur Verklebung der beiden Karosserieelemente. Solche bekannten Verfahren haben jedoch den Nachteil, dass die Handhabung der zu verklebenden Karosserieelemente sowie die Applikation des Klebstoffes einerseits aufwendig sind und andererseits gewisse Restriktionen aufweisen. So ist es beispielsweise schwierig, mit dieser Methode ineinander verschachtelte Elemente miteinander zu verkleben. Dies ist deshalb so, weil die auf das erste Element aufgetragene Klebstoffraupe bei einer Anbringung des zweiten Elementes abgestreift werden kann, und somit nicht mehr an einer gewünschten Position vorliegt, um die Elemente miteinander zu verkleben.

Eine weitere Methode zur Verklebung von Elementen im Karosseriebau von Kraftfahrzeugen sieht vor, dass - insbesondere für ineinander verschachtelte Karosserieelemente - ein flüssiger Klebstoff in eine geschlossene Kammer injiziert wird, um dadurch die zu verklebenden Elemente miteinander verklebt. Ein Nachteil dieser Methode ist es, dass fluiddicht geschlossene Hohlräume geschaffen werden müssen, welche einen Raum für den flüssigen Klebstoff vorgeben. Dies kann beispielsweise mit Dichtungen erreicht werden und erfordert Elemente mit sehr kleinen Fertigungstoleranzen. Das hat zur Folge, dass solche Systeme aufwendig und kostspielig in der Herstellung sind.

Die WO 03/047785 A1 offenbart ein System nach dem Oberbegriff des Anspruchs 1 und ein Verfahren nach dem Oberbegriff des Anspruchs 10.

Der Erfindung liegt daher die Aufgabe zugrunde, ein verbessertes System verbundener Karosserieelemente für Kraftfahrzeuge bzw. ein verbessertes Verfahren zur Verbindung von Karosserieelementen in Kraftfahrzeugen zur Verfügung zu stellen, welches erlaubt, Karosserieelemente in Kraftfahrzeugen kostengünstiger und einfacher in der Handhabung miteinander zu verbinden.

Diese Aufgabe wird zunächst gelöst durch ein System verbundener Karosserieelemente für ein Kraftfahrzeug, wobei das System ein erstes Karosserieelement und ein zweites Karosserieelement umfasst. Das erste Karosserieelement hat zumindest einen Kanal an einer Oberfläche des Karosserieelementes, wobei neben dem Kanal eine Schulter ausgebildet ist. Das System umfasst weiterhin einen Klebstoff, welcher zumindest teilweise im Kanal und zumindest teilweise auf der Schulter angeordnet ist und das erste Karosserieelement mit dem zweiten Karosserieelement verklebt. Dabei ist ein direkt an die Schulter anschliessender Anschlussbereich der Oberfläche des ersten Karosserieelementes frei von Klebstoff, wobei ein erster Raum zwischen Schulter und zweitem Karosserieelement und ein zweiter Raum zwischen Anschlussbereich und zweitem Karosserieelement gegeneinander offen sind.

Die hier vorgeschlagene Lösung hat zunächst den Vorteil, dass zur Verbindung von Karosserieelementen in Kraftfahrzeugen kein fluiddicht abgeschlossener Raum für den Klebstoff vorgesehen werden muss, sondern dass ein kostengünstigeres und einfacher zu handhabendes offenes System ohne fluiddicht abgeschlossene Zwischenräume verwendet werden kann. Somit können Karosserieelemente verwendet werden, welche keine Dichtungen aufweisen, was einem wesentlichen Kostenvorteil entspricht. Weiterhin erlaubt es die vorliegende Erfindung, auch Teile mit grösseren Fertigungstoleranzen miteinander zu verkleben bzw. zu verbinden, weil keine fluiddicht abgeschlossenen Räume für den Klebstoff vorgesehen werden müssen. Auch dies entspricht einem wesentlichen Kostenvorteil gegenüber den bekannten Systemen, weil dadurch die verschiedenen Elemente des Systems kostengünstiger und mit grösseren Fertigungstoleranzen hergestellt werden können. Zudem ist ein Vorgang des Verbindens der Karosserieelemente einfacher zu bewerkstelligen, da ein Befüllen von geschlossenen Räumen mit Klebstoff Schwierigkeiten mit sich bringt, welche hierdurch vermieden werden können, insbesondere das Verdrängen der Luft im geschlossenen Hohlraum durch den Klebstoff.

Ein Kerngedanke der vorliegenden Erfindung besteht darin, dass durch den Einsatz eines geeigneten Klebstoffes ein offenes System zur Verbindung von Karosserieelementen in Kraftfahrzeugen verwendet werden kann. Es wurde nämlich beobachtet, dass mit einem geeigneten Klebstoff ein sich selbst abdichtendes System geschaffen werden kann, vorausgesetzt, es werden diesbezüglich geeignet dimensionierte Kanäle und Schultern des ersten Karosserieelementes vorgesehen.

Dabei ist der Klebstoff so ausgebildet, dass er bei einer Abkühlung einen scharfen Übergang zwischen einem nicht verfestigten und einem verfestigten Zustand aufweist. Dies erlaubt es, Komponenten eines hier beschriebenen offenen Systems mit einem solchen geeigneten Klebstoff zu verkleben.

Dabei werden die Kanäle so dimensioniert, dass der durch die Kanäle fliessende Klebstoff vergleichsweise langsam abkühlt. Dies wird insbesondere dadurch erreicht, indem eine Oberfläche der Kanäle vergleichsweise klein ausgestaltet ist im Vergleich zu einem Volumen der Kanäle.

Demgegenüber kühlt der Klebstoff im Bereich zwischen der Schulter und dem zweiten Karosserieelement vergleichsweise schneller ab. Dies wird insbesondere dadurch erreicht, indem in diesem Bereich eine Oberfläche vergleichsweise grösser ausgestaltet ist im Vergleich zu einem Volumen dieses Bereiches.

Eine derartige Dimensionierung des offenen Systems hat nun zur Folge, dass der in erwärmtem Zustand eingebrachte Klebstoff auf den Schultern schneller abkühlt als im Kanal. Dies führt zu einer schnelleren Verfestigung des Klebstoffes auf den Schultern als in den Kanälen und damit zu einem zuverlässigen sich selbst verschliessenden System.

Durch ein geeignetes Vorsehen von solchen Kanälen auf der Oberfläche des ersten Karosserieelementes kann nun der in die Kanäle eingebrachte Klebstoff im Zwischenraum zwischen erstem und zweitem Karosserieelement verteilt werden, und durch das geeignete Vorsehen von Schulterbereichen neben den Kanälen wird ein sich selbst verschliessendes System geschaffen.

Die Bezeichnung "offen" bzw. "offener Hohlraum" bedeutet im Zusammenhang dieser Erfindung "flüssigkeitsdurchlässig" oder "nicht abgedichtet".

In einer beispielhaften Ausführungsform ist das erste Karosserieelement ein Profil, ein Gussteil oder ein blechförmiges Element, und das zweite Karosserieelement ist ein Profil, ein Gussteil oder ein blechförmiges Element.

Karosserien von Kraftfahrzeugen werden üblicherweise aus solchen Elementen aufgebaut. Dabei kann es zu verschiedenen Kombinationen solcher Elemente kommen, welche miteinander verbunden werden sollen. Ein Hauptvorteil der vorliegenden Erfindung ist es nun, dass das hier vorgeschlagene System zur Verbindung von Karosserieelementen universell für verschiedenste Elemente angewendet werden kann, unabhängig von deren Formgebung, Material oder Herstellungsweise. Somit kann dieses System vielfältig im Karosseriebau von Kraftfahrzeugen angewendet werden.

Die Bezeichnung "blechförmiges Element" umfasst im Zusammenhang dieser Erfindung ausdrücklich sowohl Elemente aus Metall als auch Elemente aus Kunststoff oder faserverstärktem Kunststoff. Diese Bezeichnung bezieht sich daher lediglich auf die Form und nicht auf das Material des Elementes.

Die Bezeichnung "Profil" umfasst im Zusammenhang dieser Erfindung ausdrücklich Elemente, welche auf unterschiedliche Art hergestellt werden. Beispielsweise sind damit Extrusionsprofile, Innenhochdruckumformungsprofile, oder gerollte blechförmige Elemente umfasst.

Die Bezeichnung "Gussteil" umfasst im Zusammenhang dieser Erfindung ausdrücklich Elemente, welche auf unterschiedliche Art hergestellt werden. Beispielsweise sind damit durch Formguss, Blockguss, oder Strangguss hergestellte Elemente umfasst.

In einer beispielhaften Ausführungsform besteht das erste Karosserieelement und/oder das zweite Karosserieelement zumindest teilweise aus Metall, Kunststoff oder faserverstärktem Kunststoff.

In einer bevorzugten Weiterbildung besteht das erste und/oder das zweite Karosserieelement zumindest teilweise aus Polyamid, insbesondere aus PA 6.6 (Nylon).

In einer bevorzugten Weiterbildung besteht das erste und/oder das zweite Karosserieelement zumindest teilweise aus Stahl, Aluminium oder Magnesium oder aus Kombinationen von diesen Metallen.

In einer alternativen bevorzugten Weiterbildung besteht das erste Karosserieelement und/oder das zweite Karosserieelement zumindest teilweise aus faserverstärkten Kunststoffen der Gruppe CFRP, GFRP oder SMC.

Ein Vorteil des hier vorgeschlagenen Systems ist insbesondere, dass verschiedene Materialien und Materialkombinationen miteinander verbunden werden können.

Erfindungsgemäß beträgt ein Abstand zwischen Schulter und zweitem Karosserieelement zwischen 0,5 und 4 mm.

Ein derart dimensionierter Abstand zwischen Schulter und zweitem Karosserieelement stellt sicher, dass der Klebstoff in diesem Bereich des offenen Hohlraums zwischen erstem Karosserieelement und zweitem Karosserieelement schneller abkühlt und dadurch verfestigt als im Bereich der Kanäle, so dass der Klebstoff durch die Kanäle verteilt wird, sich jedoch in den Bereichen der Schultern abkühlt und verfestigt und dadurch den Hohlraum abdichtet.

Je nach Zusammensetzung und Applikationsparameter (z.B. Temperatur oder Extrusionsrate) des Klebstoffes kann der Abstand zwischen Schulter und zweitem Karosserieelement anders gewählt werden, um eine gewünschte Abdichtungswirkung des Klebstoffes in diesem Bereich zu erzielen. Ebenso kann dieser Abstand zwischen Schulter und zweitem Karosserieelement dazu benutzt werden, eine Verklebungsfläche zwischen erstem Karosserieelement und zweitem Karosserieelement zu beeinflussen, wobei ein grösserer Abstand zu einer grösseren Verklebungsfläche und ein kleinerer Abstand zu einer kleineren Verklebungsfläche führen wird. Je nachdem, ob eine möglichst starke mechanische Verbindung zwischen den Karosserieelementen oder ob ein möglichst sparsamer Einsatz des Klebstoffes höher gewichtet wird, kann hier eine geeignete Lösung ausgewählt werden.

In einer beispielhaften Ausführungsform beträgt eine Kanalbreite zwischen 5 und 300 mm, bevorzugt zwischen 10 und 70 mm, besonders bevorzugt zwischen 10 und 30 mm.

In einer beispielhaften Ausführungsform beträgt eine Kanaltiefe zwischen 0.5 und 10 mm, bevorzugt zwischen 1 und 8 mm, besonders bevorzugt zwischen 2 und 5 mm.

In einer beispielhaften Ausführungsform beträgt eine Kanallänge zwischen 50 und 500 mm, bevorzugt zwischen 70 und 400 mm, besonders bevorzugt zwischen 100 und 300 mm.

Eine solche Dimensionierung des Kanals hat den Vorteil, dass dadurch der Klebstoff so langsam abgekühlt wird beim Durchfliessen des Kanals, dass der Klebstoff über eine im Wesentlichen gesamte Länge des Kanals verteilt wird, um dadurch das erste Karosserieelement und das zweite Karosserieelement zuverlässig miteinander zu verkleben.

Der Kanal kann einen konstanten Querschnitt aufweisen, in einem alternativen Ausführungsbeispiel kann der Kanal jedoch auch einen nicht-konstanten Querschnitt aufweisen. Dabei kann sowohl die Länge, die Breite, als auch die Tiefe des Kanals nichtkonstant ausgebildet sein. Somit sind beispielsweise auch Kanäle realisierbar, welche an Enden weniger Tief sind als in einer Mitte des Kanals (beispielsweise unter einer Einfüllöffnung), oder Kanäle, welche in Draufsicht eine ovale Formgebung aufweisen.

Natürlich muss der Kanal nicht linear über dessen gesamte Länge verlaufen, sondern kann auch gebogen oder mit diversen Richtungsänderungen ausgeführt werden.

Allgemein dient der Kanal der groben Verteilung des Klebstoffes im zur Verklebung vorgesehenen Zwischenbereich zwischen erstem und zweitem Karosserieelement. Somit kann je nach Anforderung der jeweiligen Anwendung eine andere Kanalgeometrie vorteilhaft sein.

Je nach Zusammensetzung und Applikationsparameter des Klebstoffes kann die Dimensionierung des Kanals in den genannten Bereichen angepasst werden, um ein optimales Resultat zu erzielen. Wünschenswert ist dabei, dass der Klebstoff erst dann im Kanal vollständig abkühlt bzw. verfestigt, wenn die gewünschte Verteilung des Klebstoffes im Zwischenraum zwischen dem ersten Karosserieelement und dem zweiten Karosserieelement erreicht worden ist.

In einer beispielhaften Ausführungsform hat der Kanal eine V-förmige oder eine U-förmige oder eine eckige oder eine halbrunde Form bzw. Querschnitt.

In einer beispielhaften Ausführungsform hat der Kanal einen im Wesentlichen W-förmigen Querschnitt. Insbesondere weist dabei ein Boden des Kanals eine Erhebung auf. Eine solche Erhebung kann dabei abgerundet, wellenförmig, kantig, oder unregelmässig geformt sein.

Ein solcher im Wesentlichen W-förmiger Querschnitt des Kanals hat den Vorteil, dass dadurch eine Menge des benötigten Klebstoffes reduziert werden kann im Vergleich zu Kanälen ohne eine solche Erhebung des Bodens des Kanales.

In einer weiteren beispielhaften Ausführungsform hat der Kanal einen unregelmässig geformten Querschnitt. Beispielsweise kann dabei ein Kanalboden schräg ausgestaltet werden, so dass der darin verfestigte Klebstoff einen keilförmigen Querschnitt aufweist. Ein solcher keilförmiger Querschnitt des Klebstoffes und ein entsprechend komplementär ausgebildeter keilförmiger Querschnitt des Kanalbodens können eine Verbesserung der Zugbelastung der verklebten Karosserieelemente bewirken, weil durch diese Geometrie eine Keilwirkung erzielt werden kann. Somit kann beispielsweise das erste Karosserieelement besser hinsichtlich Zugbelastung im zweiten Karosserieelement verklebt werden.

In ähnlicher Weise kann der Querschnitt des Kanals auch mit einem Hinterschnitt oder mit anderen Verhakungen ausgebildet werden, um eine noch bessere Verbindung zwischen den Elementen zu erreichen.

Je nachdem, wie schnell der Klebstoff durch den Kanal fliessen soll bzw. wie schnell der Klebstoff im Kanal abkühlen und somit verfestigen soll, kann eine geeignete Querschnittsform des Kanals ausgewählt werden. Grundsätzlich gilt, dass der Klebstoff schneller abkühlt, je grösser die Kontaktoberfläche zwischen Klebstoff und erstem Karosserieelement ausfällt. Somit wird der Klebstoff in einer halbrunden Form langsamer auskühlen als in einer viereckigen Querschnittsform.

In einer beispielhaften Ausführungsform verläuft der Kanal quer oder im Wesentlichen quer zu einer Längsrichtung des ersten Karosserieelementes.

In einer alternativen Ausführungsform verläuft der Kanal längs oder im Wesentlichen längs zu einer Längsrichtung des ersten Karosserieelementes.

In einer weiteren beispielhaften Ausführungsform umrundet der Kanal das erste Karosserieelement vollständig und ist so in sich geschlossen.

In einer weiteren beispielhaften Ausführungsform weist der Kanal Verzweigungen auf.

In einer weiteren beispielhaften Ausführungsform weist der Kanal einen Hauptkanal und damit verbundene Seitenkanäle auf. Die Anordnung und Ausgestaltung des Kanals bzw. der Kanäle auf der Oberfläche des ersten Karosserieelementes ist davon abhängig, an welchen Stellen das erste Karosserieelement mit dem zweiten Karosserieelement verklebt werden soll. Zu diesem Zweck können Kanäle, welche das Verstärkungselement vollständig umrunden, vorgesehen werden, es können mehrere separat voneinander ausgestaltete Kanäle vorgesehen werden, oder aber es können Kanäle mit Verzweigungen bzw. Seitenkanälen vorgesehen werden. Insbesondere können Seitenkanäle dazu verwendet werden, die Klebefläche zwischen erstem Karosserieelement und zweitem Karosserieelement zu vergrössern.

In einer beispielhaften Ausführungsform beträgt eine Breite der Schulter, gemessen in derselben Richtung wie die Kanalbreite, weniger als 30 mm, bevorzugt weniger als 20 mm, besonders bevorzugt weniger als 10 mm, besonders bevorzugt weniger als 5 mm.

Das Vorsehen einer derart dimensionierten Schulter hat den Vorteil, dass dadurch eine Verklebung des ersten Karosserieelementes mit dem zweiten Karosserieelement realisierbar ist, welche eine geringe Menge an Klebstoff erfordert. Zudem wird dadurch eine grössere Gestaltungsfreiheit des ersten Karosserieelementes erhalten, da die Bereiche ausserhalb der Schulter nicht zur Verklebung des ersten Karosserieelementes mit dem zweiten Karosserieelement vorgesehen sind und daher keine vordefinierte Formgebung aufweisen müssen. Je kleiner nun die Schulter ausgebildet wird, umso grösser wird die Gestaltungsfreiheit des ersten Karosserieelementes.

In einer alternativen Ausführungsform beträgt eine Breite der Schulter, gemessen in derselben Richtung wie die Kanalbreite, zwischen 30 und 150 mm, bevorzugt zwischen 40 und 120 mm, besonders bevorzugt zwischen 50 und 100 mm.

Das Vorsehen einer derart dimensionierten Schulter hat hingegen den Vorteil, dass dadurch eine Verklebung des ersten Karosserieelementes mit dem zweiten Karosserieelement realisierbar ist, welche eine grössere Verklebungsfläche aufweist, was zu einer mechanisch stabileren Verbindung zwischen erstem und zweitem Karosserieelement führt.

Je nach Anforderung und Ausgangslage kann demnach eine geeignete Breite der Schulter gewählt werden. Um das Stoppen der Ausbreitung des Klebstoffes auf der Schulter sicherzustellen, kann beispielsweise das Verfestigungsverhalten des Klebstoffes durch eine entsprechende Anpassung der Klebstoffzusammensetzung, oder durch eine veränderte Klebstofftemperatur oder Extrusionsrate bei der Einbringung des Klebstoffes in den Kanal, oder durch eine Anpassung des Abstands zwischen Schulter und Strukturelement beeinflusst werden.

In einer beispielhaften Ausführungsform beträgt eine Breite eines Anschlussbereiches, gemessen in derselben Richtung wie die Kanalbreite, mehr als 1 mm, bevorzugt mehr als 20 mm, besonders bevorzugt mehr als 30 mm, besonders bevorzugt mehr als 40 mm.

In einer beispielhaften Ausführungsform liegen die Schulter und der Anschlussbereich in derselben Ebene.

In einer alternativen Ausführungsform liegen die Schulter und der Anschlussbereich nicht in derselben Ebene.

Da der Anschlussbereich nicht mit Klebstoff bedeckt wird, ist es für die Verklebung unerheblich, wie dieser Anschlussbereich ausgestaltet ist. Wesentlich ist lediglich, dass der erste Raum zwischen Schulter und zweitem Karosserieelement und der zweite Raum zwischen Anschlussbereich und zweitem Karosserieelement gegeneinander offen sind.

Je nach Geometrie des ersten Karosserieelementes und des zweiten Karosserieelementes kann der Anschlussbereich des ersten Karosserieelementes auf geeignete Art und Weise ausgebildet werden.

In einer bevorzugten Ausführungsform hat das erste oder das zweite Karosserieelement eine Einfüllöffnung zur Einbringung des Klebstoffes in den Kanal.

Der Vorteil einer solchen Einfüllöffnung ist es, dass der Klebstoff direkt in den Kanal eingebracht werden kann.

In einer bevorzugten Weiterbildung mündet die Einfüllöffnung direkt in den Kanal. Dabei kann die Einfüllöffnung mittig in Bezug auf eine Länge und/oder Breite des Kanales angeordnet sein.

Weiterhin kann die Einfüllöffnung im ersten Karosserieelement, welches auch den Kanal aufweist, angeordnet sein, oder aber die Einfüllöffnung kann im zweiten Karosserieelement angeordnet sein. Grundsätzlich ist die Anordnung der Einfüllöffnung davon abhängig, wie die Karosserieelemente zugänglich sind (in einer Situation, in welcher der Klebstoff eingebracht werden soll).

In einer beispielhaften Ausführungsform sind das erste Karosserieelement und das zweite Karosserieelement zur Vorfixierung des ersten und des zweiten Karosserieelementes zumindest teilweise miteinander verbunden, bevor der Klebstoff eingebracht wird. In einer bevorzugten Ausführungsform werden die Karosserieelemente durch eine einseitige oder zweiseitige mechanische Fügetechnik, insbesondere durch Nieten, Schweissen, Schrauben oder Bolzen vorfixiert.

In einer weiteren beispielhaften Ausführungsform hat das erste Karosserieelement und/oder das zweite Karosserieelement zumindest ein Element zur Abstützung des ersten bzw. zweiten Karosserieelementes gegen das jeweils andere Karosserieelement. In einer bevorzugten Ausführungsform ist dieses Element als Vorsprung im ersten bzw. zweiten Karosserieelement ausgebildet.

Solche Elemente zur Fixierung und/oder Abstützung des ersten Karosserieelementes gegenüber dem zweiten Karosserieelement haben den Vorteil, dass die Karosserieelemente in einer vorgesehenen Position verbleiben, bevor der Klebstoff verfestigt und/oder ausgehärtet ist.

In einer beispielhaften Ausführungsform ist das erste Karosserieelement und das zweite Karosserieelement ein Profil. Beispielsweise weisen diese Profile unterschiedlich grosse Querschnitte auf, so dass das kleinere Profil in das grössere Profil einschiebbar ist. Dabei kann der Kanal wahlweise im kleineren oder im grösseren Profil vorgesehen sein, was bedeutet, dass wahlweise das grössere Profil das erste Karosserieelement oder das zweite Karosserieelement im Sinne dieser Erfindung sein kann.

In einem weiteren Ausführungsbeispiel sind das erste und das zweite Karosserieelement aus je einem Profil und einem blechförmigen Element ausgebildet. Dabei kann wiederum der Kanal wahlweise im blechförmigen Element oder aber im Profil vorgesehen sein. Je nachdem ist demnach das Profil das erste oder das zweite Karosserieelement.

In einer weiteren beispielhaften Ausführungsform sind das erste und das zweite Karosserieelement je ein Gussteil und ein Profil. Dabei kann beispielsweise das Gussteil eine Öffnung aufweisen, in welche das Profil einschiebbar ist. Wiederum kann der Kanal sowohl im Profil oder aber im Gussteil vorgesehen sein. Dies bedeutet wiederum, dass das Gussteil das erste oder aber das zweite Karosserieelement im Sinne dieser Erfindung sein kann.

In einer weiteren beispielhaften Ausführungsform sind das erste und das zweite Karosserieelement je ein Gussteil. Beispielsweise kann dabei eines der Gussteile eine Öffnung aufweisen, in welches ein Teil des zweiten Gussteils einschiebbar ist. Wiederum kann der Kanal im einen oder im anderen Gussteil vorgesehen sein. Demnach ist das Gussteil mit der Öffnung wahlweise das erste oder das zweite Karosserieelement im Sinne dieser Erfindung.

In einer weiteren beispielhaften Ausführungsform sind das erste und das zweite Karosserieelement blechförmige Elemente. Dabei kann der Kanal wahlweise im ersten oder im zweiten blechförmigen Element vorgesehen sein. Entsprechend ist das erste oder das zweite blechförmige Element das erste Karosserieelement oder das zweite Karosserieelement im Sinne dieser Erfindung.

In einem weiteren Ausführungsbeispiel sind das erste und das zweite Karosserieelement je ein blechförmiges Element und ein Gussteil. Beispielsweise können zwei blechförmige Elemente, welche einen U-förmigen Querschnitt aufweisen, zu einem Hohlraum verschweisst oder verklebt werden. Das Gussteil kann beispielsweise in diesem Hohlraum angeordnet werden. Wiederum kann der Kanal entweder im blechförmigen Element oder im Gussteil angeordnet werden. Entsprechend ist das Gussteil das erste oder das zweite Karosserieelement im Sinne dieser Erfindung.

Es versteht sich von selbst, dass auch mehr als zwei Karosserieelemente miteinander verklebt werden können.

Ein wesentlicher Vorteil des hier vorgeschlagenen Systems ist es, dass unterschiedlichst geformte Karosserieelemente miteinander verbunden werden können, weil Kanäle und Schulter an jedem beliebigen Element vorgesehen werden können. Dies erlaubt einen vielfältigen Einsatz des hier vorgeschlagenen Systems verbundener Karosserieelemente für Kraftfahrzeuge.

Die eingangs gestellte Aufgabe wird weiterhin gelöst durch ein Verfahren zur Verbindung von Karosserieelementen in einem Kraftfahrzeug. Das Verfahren umfasst die Schritte: Bereitstellen eines ersten Karosserieelementes, welches zumindest einen Kanal an einer Oberfläche des ersten Karosserieelementes hat, wobei die Oberfläche des ersten Karosserieelementes neben dem Kanal eine Schulter bildet; Bereitstellen eines zweiten Karosserieelementes; Anordnen des ersten Karosserieelementes und des zweiten Karosserieelementes derart, dass zwischen dem Kanal und der Schulter des ersten Karosserieelementes und dem zweiten Karosserieelement ein offener Hohlraum gebildet wird; Einbringen eines Klebstoffes in den Kanal; und Ausbreiten des Klebstoffes zumindest teilweise im Kanal und zumindest teilweise auf der Schulter zur Verklebung des ersten Karosserieelementes mit dem zweiten Karosserieelement, wobei die Ausbreitung des Klebstoffes auf der Schulter gestoppt wird.

Das hier vorgeschlagene Verfahren bietet wiederum dieselben Vorteile, welche bereits zum hier vorgeschlagenen System verbundener Karosserieelemente genannt wurden. Insbesondere kann dadurch das Verfahren zur Verklebung von Karosserieelementen kostengünstiger und einfacher in der Handhabung ausgestaltet werden.

Erfindungsgemäß wird die Ausbreitung des Klebstoffes auf der Schulter durch eine zumindest teilweise Verfestigung des Klebstoffes auf der Schulter gestoppt.

In einer beispielhaften Ausführungsform umfasst das Verfahren den weiteren Schritt: Härten des Klebstoffes durch eine Anwendung einer Temperatur von zumindest 120°C, bevorzugt von zumindest 140°C, besonders bevorzugt von zumindest 160°C. Beispielsweise kann die Härtung des Klebstoffes in einem Ofen stattfinden, wie er üblicherweise nach der kathodischen Tauchlackierung (KTL) der Karosserie zur Anwendung kommt. In solchen Öfen herrschen üblicherweise Temperaturen zwischen 120°C und 220°C. Solche Temperaturen eignen sich insbesondere für das Aushärten von Klebstoffen, welche im Zusammenhang mit dieser Erfindung verwendet werden können. Da die Karosserie mit den verbundenen Karosserieelementen und dem verfestigten Klebstoff sowieso durch den Prozess der Tauchlackierung und anschliessender Hitzeanwendung zur Aushärtung der Lackierung geht, ist eine Nutzung dieser Hitzeanwendung im Ofen nach der Tauchlackierung zur Aushärtung des Klebstoffes besonders vorteilhaft.

In einer beispielhaften Ausführungsform wird der Klebstoff beim Einbringen in den Kanal durch eine Pumpe aus einem Klebstofftank gefördert.

In einer beispielhaften Ausführungsform wird der Klebstoff beim Einbringen in den Kanal durch eine Einfüllöffnung im ersten oder im zweiten Karosserieelement gefördert.

Das Vorsehen von einer Einfüllöffnung im ersten oder im zweiten Karosserieelement hat den Vorteil, dass dadurch der Klebstoff auf einfache Art und Weise, beispielsweise mit Robotern, in den Kanal eingebracht werden kann.

### Klebstoff

Die nachfolgend beschriebene Klebstoffzusammensetzung ist ein beispielhafter Klebstoff, wie er im Zusammenhang dieser Erfindung verwendet werden kann.

Es wurde eine hitzehärtende einkomponentige Epoxidzusammensetzung gemäss Tabelle 1 hergestellt.

**Tabelle 1, Eingesetzte Rohstoffe.**

| **Rohstoffe** | **Gewichts-teile** |
|---|---|
| Epoxy-Flüssigharz, D.E.R. 331 (Bisphenol-A-diglycidylether), Dow | 50 |
| Polyesterpolyol, Dynacol 7380, Degussa AG, Deutschland | 5 |
| Reaktivverdünner, Hexandiolglycidylether, Denacol EX-212, Nagase America | 1 |
| Zähigkeitsverbesserer ***D-1*** | 34 |
| Härter, Dicyandiamid | 4.78 |
| Beschleuniger, substituierter Harnstoff | 0.22 |
| Pyrogene Kieselsäure | 5 |

### Herstellung eines Zähigkeitsverbesserers ("D-1")

150 g Poly-THF 2000 (OH-Zahl 57 mg/g KOH) und 150 Liquiflex H (OH-Zahl 46 mg/g KOH) wurden 30 Minuten unter Vakuum bei 105°C getrocknet. Nachdem die Temperatur auf 90°C reduziert worden war, wurden 61.5 g IPDI und 0.14 g Dibutylzinndilaurat zugegeben. Die Reaktion wurde unter Vakuum bei 90°C bis zur Konstanz des NCO-Gehaltes bei 3.10% nach 2.0 h geführt (berechneter NCO-Gehalt: 3.15%). Anschliessend wurden 96.1 g Cardanol als Blockierungsmittel zugegeben. Es wurde bei 105°C unter Vakuum weitergerührt bis kein freies NCO mehr nachgewiesen werden konnte. Das Produkt wurde so als Zähigkeitsverbesserer D-1 verwendet. Folgende Rohstoffe wurden dazu eingesetzt:

| |
|---|
| Poly-THF 2000 (Difunktionelles Polybutylenglykol) (OH-Equivalentgewicht = ca. 1000 g/OH-Equivalent), BASF |
| Liquiflex H (Hydroxylterminertes Polybutadien) (OH-Equivalentgewicht = ca. 1230 g/OH-Equivalent), Krahn |
| Isophoron-diisocyanat (= "IPDI"), Evonik |
| Cardolite NC-700 (Cardanol, meta-substituiertes Alkenyl-mono-Phenol), Cardolite |

### Herstellung Masterbatch

Das Polyesterpolyol wurde etwa 40°C über seinem Erweichungspunkt von 77 °C (ca. 100-140°C) während ca. 30 Minuten mit Epoxy-Flüssigharz vermischt bis eine klare Mischung (ca. 33 Gew.-% Polyesterpolyol bezogen auf das Gesamtgewicht des Masterbatch) entstand. Der Masterbatch wurde anschliessend auf ca. 100°C heruntergekühlt.

### Herstellung der hitzehärtenden einkomponentigen Epoxidzusammensetzung:

Die übrigen Komponenten der Epoxidzusammensetzung wurden zu einer homogenen Masse vermischt, bevorzugt bei Temperaturen von ca. 50-90°C. Sobald die Mischung homogen war wurde der Masterbatch in flüssiger Form (Temperatur Masterbatch 100°C) zugegeben und sofort vermischt.

Die Injektion der hitzehärtenden einkomponentigen Epoxidzusammensetzung erfolgte bei einer Temperatur von 60°C und bei einer Injektionsgeschwindigkeit von 50 ml/min.

Einzelheiten und Vorteile der Erfindung werden im Folgenden anhand von Ausführungsbeispielen und mit Bezug auf schematische Zeichnungen beschrieben. Es zeigen:
- Fig. 1: eine beispielhafte Darstellung einer Karosserie eines Kraftfahrzeuges;
- Fig. 2a: eine schematische Darstellung eines beispielhaften ersten Karosserieelementes im Querschnitt;
- Fig. 2b: eine schematische Darstellung eines beispielhaften ersten und zweiten Karosserieelementes;
- Fig. 3a bis 3c: eine schematische Darstellung eines beispielhaften ersten Karosserieelementes;
- Fig. 4a bis 4f: eine schematische Darstellung verschiedener beispielhafter Kombinationen eines ersten und eines zweiten Karosserieelementes;
- Fig. 5a bis 5c: eine schematische Darstellung eines beispielhaften Einbringens eines Klebstoffes in einen Zwischenraum zwischen einem ersten und einem zweiten Karosserieelement; und
- Fig. 6: eine schematische Darstellung einer Einbringungseinrichtung.

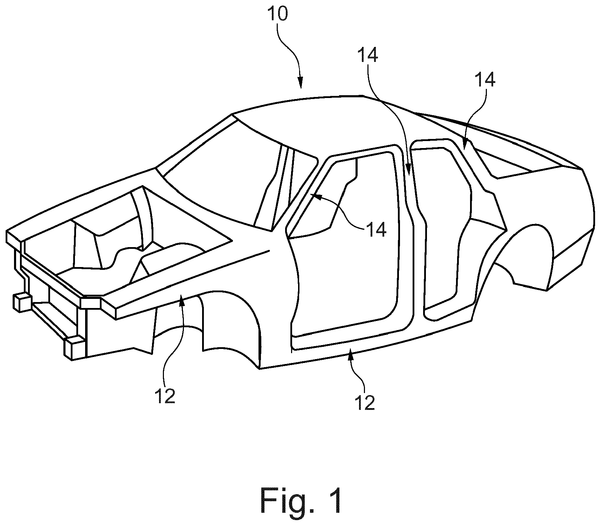

In Fig. 1 ist eine Karosserie 10 eines Kraftfahrzeugs schematisch dargestellt. Die Karosserie 10 weist dabei verschiedene Strukturen auf, wie beispielsweise Säulen 14 und Verstrebungen 12. Solche und andere Strukturen der Karosserie 10 müssen auf geeignete Art und Weise miteinander verbunden werden. Dabei können insbesondere Profile, Gussteile und blechförmige Elemente miteinander verbunden werden.

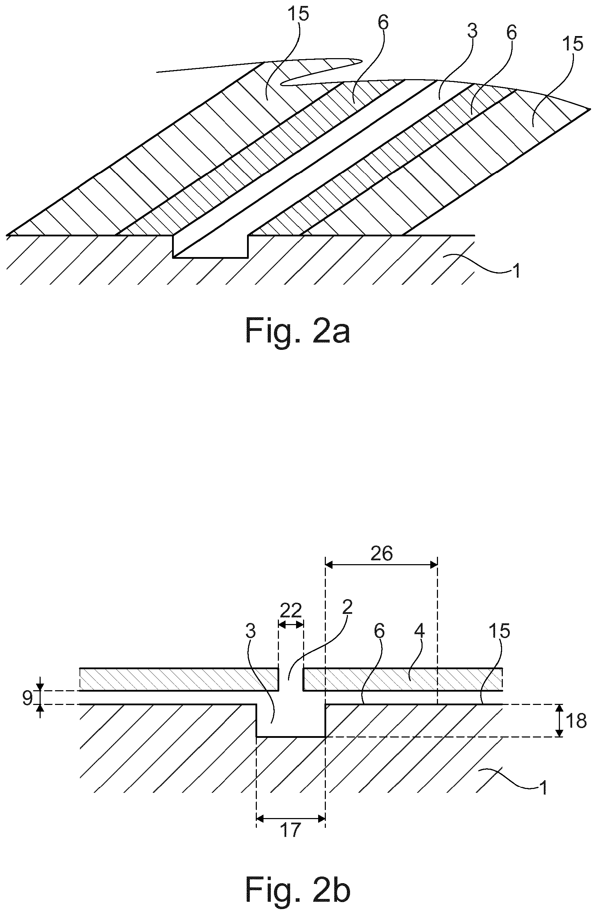

In Fig. 2a ist schematisch ein Querschnitt eines Ausschnittes eines ersten Karosserieelementes 1 dargestellt. Das erste Karosserieelement 1 hat dabei auf seiner Oberfläche einen Kanal 3. Dabei bildet die Oberfläche des ersten Karosserieelementes 1 neben dem Kanal 3 eine Schulter 6 aus. Neben der Schulter 6 ist jeweils ein Anschlussbereich 15 angeordnet. Dabei wird bei der Verbindung des ersten Karosserieelementes 1 mit dem zweiten Karosserieelement (nicht dargestellt in Fig. 2a) der Klebstoff im Kanal 3 und auf den Schultern 6 ausgebreitet.

In Fig. 2b ist schematisch ein Querschnitt eines Ausschnittes eines ersten Karosserieelementes 1 und eines zweiten Karosserieelementes 4 dargestellt. Das erste Karosserieelement 1 hat wiederum einen Kanal 3, welcher auf der Oberfläche des ersten Karosserieelementes 1 ausgebildet ist. Der Kanal 3 hat dabei eine Kanalbreite 17 und eine Kanaltiefe 18. Der Querschnitt des Kanals 3 ist in diesem Ausführungsbeispiel rechteckig ausgebildet. Neben dem Kanal 3 ist wiederum eine Schulter 6 ausgebildet. Die Schulter 6 hat dabei eine Schulterbreite 26. Neben der Schulter 6 ist der Anschlussbereich 15 angeordnet.

Das zweite Karosserieelement 4 ist nun derart relativ zum ersten Karosserieelement 1 angeordnet, dass ein Abstand 9 zwischen Schulter 6 des ersten Karosserieelementes 1 und der Oberfläche des zweiten Karosserieelementes 4 besteht.

Das zweite Karosserieelement 4 hat in diesem Ausführungsbeispiel eine Einfüllöffnung 2, welche einen Durchmesser 22 hat. Durch diese Einfüllöffnung 2 kann der Klebstoff (nicht dargestellt in dieser Figur) in den Kanal 3 eingebracht werden.

In einer nicht dargestellten alternativen Ausführungsform kann die Einfüllöffnung auch im ersten Karosserieelement 1 angeordnet sein. Je nach Zugänglichkeit kann das Anordnen der Einfüllöffnung im ersten oder im zweiten Karosserieelement Vorteile mit sich bringen.

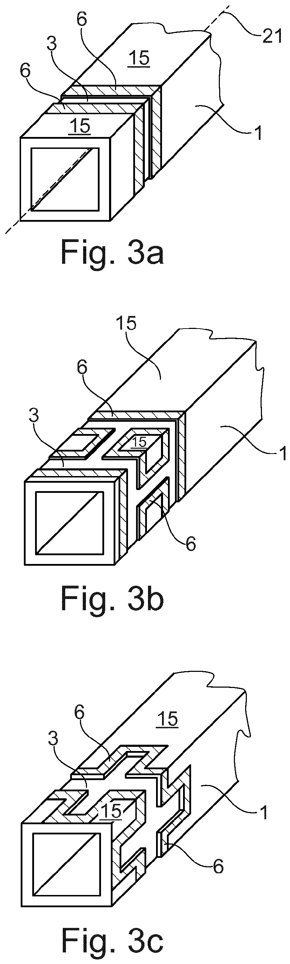

In den Fig. 3a bis 3c sind verschiedene Ausführungsformen eines beispielhaften ersten Karosserieelementes 1 dargestellt. Das erste Karosserieelement 1 hat dabei jeweils eine Längsachse 21. Auf einer Oberfläche des ersten Karosserieelementes 1 ist zumindest ein Kanal 3 angeordnet. Zudem hat das erste Karosserieelement 1 jeweils neben dem Kanal 3 eine Schulter 6, direkt angrenzend an die Schulter 6 ist ein Anschlussbereich 15 angeordnet. In diesem Ausführungsbeispiel ist das erste Karosserieelement 1 als Profil ausgestaltet.

Das beispielhafte erste Karosserieelement 1 in Fig. 3a hat einen Kanal 3, welcher das erste Karosserieelement 1 vollständig umrundet und welcher in sich geschlossen ist. Zudem ist der Kanal 3 in diesem Ausführungsbeispiel quer zur Längsachse 21 des ersten Karosserieelementes 1 angeordnet.

Im Ausführungsbeispiel gemäss Fig. 3b hat das erste Karosserieelement 1 zwei Kanäle 3, welche jeweils das erste Karosserieelement 1 vollständig umrunden. Zudem sind die beiden umrundenden Kanäle 3 durch Seitenkanäle miteinander verbunden.

Das in Fig. 3c dargestellte Ausführungsbeispiel eines ersten Karosserieelementes 1 hat ebenfalls einen Kanal 3, welcher das erste Karosserieelement 1 vollständig umrundet. Im Gegensatz zum Ausführungsbeispiel in Fig. 3a hat der umrundende Kanal 3 im Ausführungsbeispiel nach Fig. 3c auf jeder Längsseite des ersten Karosserieelementes 1 zusätzlich Seitenkanäle, um den Klebstoff breiter auf dem ersten Karosserieelement 1 verteilen zu können.

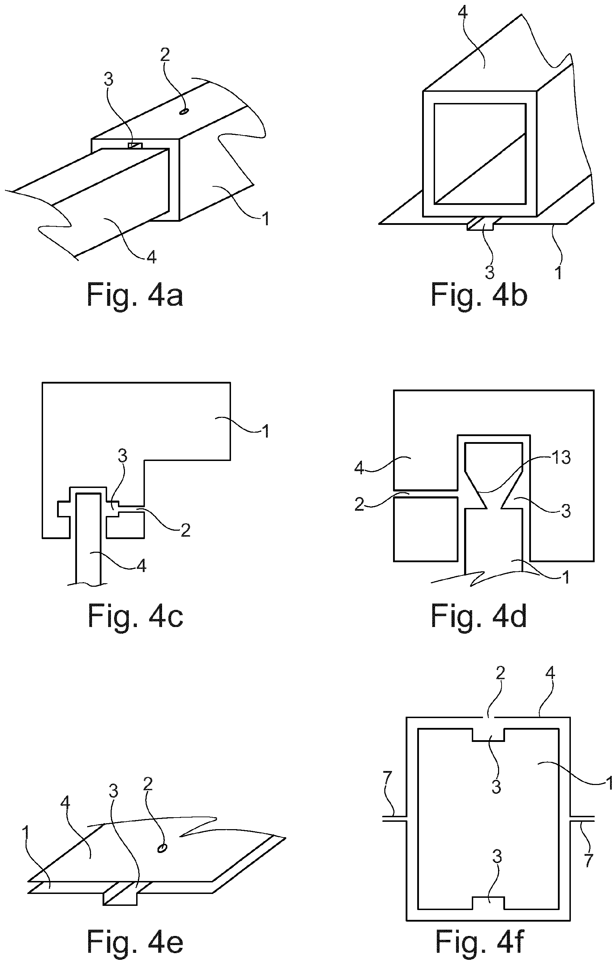

In den Fig. 4a bis 4f sind beispielhaft verschiedene Kombinationen eines ersten Karosserieelementes 1 mit einem zweiten Karosserieelement 4 dargestellt. Es versteht sich von selbst, dass viele weitere nicht dargestellte Kombinationen möglich sind.

In Fig. 4a sind sowohl das erste als auch das zweite Karosserieelement 1, 4 als Profil ausgebildet. Dabei hat das erste Karosserieelement 1 in diesem Ausführungsbeispiel einen grösseren Durchmesser als das zweite Karosserieelement 4. Dadurch kann zur Verbindung der Karosserieelemente das zweite Karosserieelement 4 in das erste Karosserieelement 1 eingeschoben werden. Das erste Karosserieelement 1 hat auf einer Oberfläche einen Kanal 3. Zudem hat das erste Karosserieelement 1 eine Einfüllöffnung 2. Somit kann Klebstoff durch die Einfüllöffnung 2 in den Kanal 3 eingebracht werden, um das erste Karosserieelement 1 mit dem zweiten Karosserieelement 4 zu verkleben. In einer alternativen Ausführungsform kann der Kanal 3 und/oder die Einfüllöffnung 2 auch im kleineren Profil angeordnet sein.

Das in Fig. 4b dargestellte Ausführungsbeispiel zeigt ein erstes Karosserieelement 1, welches als blechförmiges Element ausgebildet ist, und ein zweites Karosserieelement 4, welches als Profil ausgebildet ist. In diesem Ausführungsbeispiel hat das blechförmige erste Karosserieelement 1 einen Kanal. Die Einfüllöffnung zur Einbringung des Klebstoffs in den Kanal 3 ist in dieser Darstellung nicht ersichtlich.

In Fig. 4c ist ein weiteres Ausführungsbeispiel einer Kombination von erstem und zweitem Karosserieelement dargestellt. Dabei ist das erste Karosserieelement 1 als Gussteil ausgebildet, und das zweite Karosserieelement 4 ist als Profil ausgestaltet. In diesem Ausführungsbeispiel ist der Kanal 3 im Gussteil angeordnet. Ebenso ist eine Einfüllöffnung 2 im Gussteil angeordnet.

In Fig. 4d ist eine weitere Kombination eines beispielhaften ersten Karosserieelementes 1 und eines beispielhaften zweiten Karosserieelementes 4 dargestellt. In diesem Ausführungsbeispiel ist das erste Karosserieelement 1 als Gussteil ausgebildet, und das zweite Karosserieelement 4 ist ebenfalls als Gussteil ausgebildet.

In diesem Ausführungsbeispiel hat der Kanal einen asymmetrischen Querschnitt, wobei ein Kanalbett 13 schräg ausgebildet ist. Dies hat zur Folge, dass sowohl der im Kanal 3 verfestigte Klebstoff als auch das Gussteil 1 in diesem Bereich einen keilförmigen Querschnitt aufweisen. Wird nach der Verklebung des ersten Karosserieelementes 1 mit dem zweiten Karosserieelement 4 nun das erste Karosserieelement 1 mit einer Kraft beaufschlagt, welche in Richtung der Längsachse des ersten Karosserieelementes 1 wirkt, bewirken die keilförmigen Querschnitte des Klebstoffes und des ersten Karosserieelementes 1 eine bessere Verankerung des ersten Karosserieelementes 1 im zweiten Karosserieelement 4.

In Fig. 4e ist eine weitere beispielhafte Ausführungsform eines ersten Karosserieelementes 1 und eines zweiten Karosserieelementes 4 dargestellt. In diesem Ausführungsbeispiel sind sowohl das erste Karosserieelement 1 als auch das zweite Karosserieelement 4 als blechförmige Elemente ausgebildet. Das erste Karosserieelement 1 hat wiederum einen Kanal 3 in seiner Oberfläche ausgebildet.

In Fig. 4f ist eine weitere beispielhafte Ausführungsform einer Kombination eines ersten Karosserieelementes 1 und eines zweiten Karosserieelementes 4 dargestellt. In diesem Ausführungsbeispiel ist das erste Karosserieelement 1 als Gussteil ausgebildet, und das zweite Karosserieelement 4 besteht aus miteinander verbundenen blechförmigen Elementen. In diesem Ausführungsbeispiel wurden zwei Bleche mit U-förmigem Querschnitt an Flanschen 7 miteinander verklebt oder verschweisst. Im dadurch entstehenden Hohlraum ist nun das Gussteil 1 angeordnet. In diesem Ausführungsbeispiel sind zwei Kanäle 3 ersichtlich, welche wiederum auf einer Oberfläche des ersten Karosserieelementes 1 ausgebildet sind. Die Einfüllöffnung 2 ist in diesem Ausführungsbeispiel im zweiten Karosserieelement 4 ausgebildet.

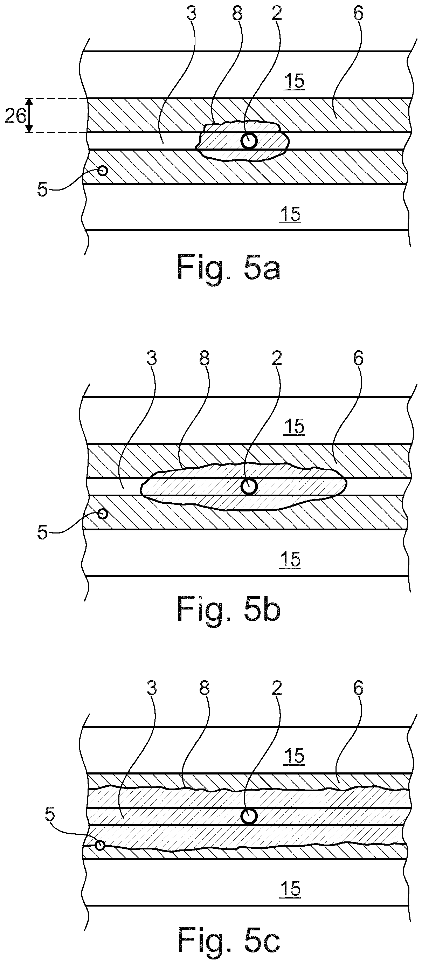

In den Fig. 5a bis 5c ist ein beispielhafter Vorgang einer Einbringung des Klebstoffes 8 in einem Zwischenraum zwischen erstem Karosserieelement und zweitem Karosserieelement dargestellt. Dabei zeigt Fig. 5a eine Situation kurz nach einem Beginn des Einbringens des Klebstoffes 8. Fig. 5b zeigt eine Situation, in welcher sich der bereits eingebrachte Klebstoff 8 vorwiegend entlang des Kanals 3 ausbreitet, und in welcher gleichzeitig fortwährend neuer Klebstoff 8 eingebracht wird. Fig. 5c zeigt schliesslich eine Situation, in welcher der Klebstoff 8 fertig in den Zwischenraum eingebracht ist und das erste Karosserieelement in vorgesehener Art und Weise mit dem zweiten Karosserieelement verklebt ist.

Der Klebstoff 8 wird durch eine Einfüllöffnung 2 in den Kanal 3 eingebracht. Der flüssige Klebstoff 8 verbreitet sich vorwiegend in Richtung des Kanals 3 und fliesst zumindest teilweise auf die Schulter 6 des ersten Karosserieelementes. Dadurch, dass der Abstand zwischen Schulter 6 und dem zweiten Karosserieelement geringer ist als der Abstand zwischen einem Boden des Kanals 3 und dem zweiten Karosserieelement, kühlt der Klebstoff 8 im Bereich der Schulter schneller aus als im Bereich des Kanals 3 und verfestigt sich als Folge dieser Abkühlung. Dies führt zu einer sich selbst abdichtenden Funktion des Klebestoffes 8 im Bereich der Schulter 6. Das System ist dabei derart konfiguriert, dass der Klebstoff 8 nicht über den Bereich der Schulter 6 fliesst, so dass der Anschlussbereich 15 frei von Klebstoff 8 bleibt.

Zudem ist in diesem Ausführungsbeispiel eine Prüföffnung 5 vorgesehen, welche erlaubt, einen Fortschritt der Ausbreitung des Klebstoffes 8 im Zwischenbereich zwischen erstem Karosserieelement und zweitem Karosserieelement zu überprüfen.

In den Fig. 5a und 5b hat sich der Klebstoff 8 noch nicht bis zur Prüföffnung 5 ausgebreitet. Fig. 5c zeigt hingegen eine Situation, in welcher der Klebstoff 8 in vorgesehener Art und Weise den Zwischenraum zwischen erstem Karosserieelement und zweitem Karosserieelement ausfüllt und dabei die Prüföffnung 5 erreicht.

Das in den Fig. 5a bis 5c dargestellte Ausführungsbeispiel kann beispielsweise ein erstes und ein zweites Karosserieelement umfassen, welche als blechförmige Elemente ausgebildet sind. Eine entsprechende Seitenansicht einer solchen Kombination eines ersten und eines zweiten Karosserieelementes ist in Fig. 4e dargestellt.

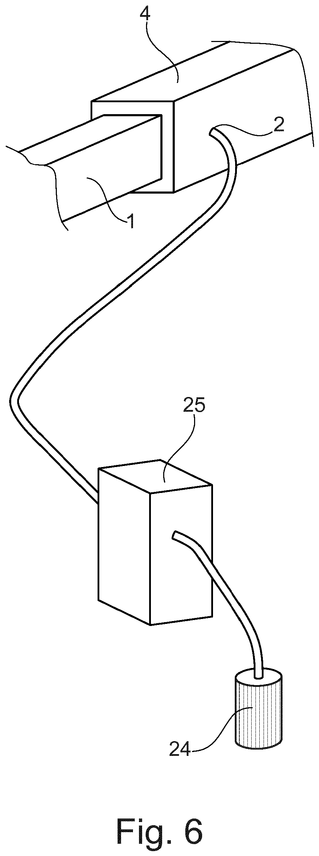

In Fig. 6 ist eine Einrichtung zur Einbringung des Klebstoffes in den Zwischenbereich zwischen dem ersten und dem zweiten Karosserieelement (nicht ersichtlich auf dieser Darstellung) dargestellt. Dabei fördert eine Pumpe 25 Klebstoff aus einem Klebstofftank 24 durch eine Einfüllöffnung 2 im ersten Karosserieelement in den Zwischenraum zwischen erstem und zweitem Karosserieelement. In diesem Ausführungsbeispiel ist der Kanal des ersten Karosserieelementes 1 nicht ersichtlich, weil er vollständig vom zweiten Karosserieelement 4 abgedeckt ist.

### Figurenlegende

- 1: erstes Karosserieelement
- 2: Einfüllöffnung
- 3: Kanal
- 4: zweites Karosserieelement
- 5: Prüföffnung
- 6: Schulter
- 7: Flansch
- 8: Klebstoff
- 9: Abstand zwischen Schulter und zweitem Karosserieelement
- 10: Karosserie
- 12: Verstrebung
- 13: Kanalbett
- 14: Säule
- 15: Anschlussbereich
- 17: Kanalbreite
- 18: Kanaltiefe
- 21: Längsachse
- 22: Durchmesser der Einfüllöffnung
- 24: Klebstofftank
- 25: Pumpe
- 26: Schulterbreite

## Patentansprüche

1. System verbundener Karosserieelemente (1, 4) für ein Kraftfahrzeug, das System umfassend:
ein erstes Karosserieelement (1), welches zumindest einen Kanal (3) an einer Oberfläche des Karosserieelementes (1) hat, wobei neben dem Kanal (3) eine Schulter (6) ausgebildet ist;
ein zweites Karosserieelement (4);
einen Klebstoff (8), welcher zumindest teilweise im Kanal (3) und zumindest teilweise auf der Schulter (6) angeordnet ist und das erste Karosserieelement (1) mit dem zweiten Karosserieelement (4) verklebt;
wobei ein direkt an die Schulter (6) anschliessender Anschlussbereich (15) der Oberfläche des ersten Karosserieelementes (1) frei ist von Klebstoff (8), wobei ein erster Raum zwischen Schulter (6) und zweitem Karosserieelement (4) und ein zweiter Raum zwischen Anschlussbereich (15) und zweitem Karosserieelement (4) gegeneinander offen sind;
**dadurch gekennzeichnet, dass** ein Abstand (9) zwischen Schulter (6) und zweitem Karosserieelement (4) zwischen 0,5 und 4 mm beträgt.

2. System nach Anspruch 1, wobei das erste Karosserieelement (1) ein Profil, ein Gussteil oder ein blechförmiges Element ist, und wobei das zweite Karosserieelement (4) ein Profil, ein Gussteil oder ein blechförmiges Element ist.

3. System nach Anspruch 1 oder 2, wobei das erste Karosserieelement (1) und/oder das zweite Karosserieelement (4) zumindest teilweise aus Metall, Kunststoff oder faserverstärktem Kunststoff bestehen.

4. System nach einem der vorhergehenden Ansprüche, wobei eine Kanalbreite (17) zwischen 5 und 300 mm beträgt und/oder wobei eine Kanaltiefe (18) zwischen 0.5 und 10 mm beträgt und/oder wobei eine Kanallänge zwischen 50 und 500 mm beträgt.

5. System nach einem der vorhergehenden Ansprüche, wobei der Kanal (3) das erste Karosserieelement (1) vollständig umrundet und so in sich geschlossen ist.

6. System nach einem der vorhergehenden Ansprüche, wobei der Kanal (3) Verzweigungen aufweist und/oder wobei der Kanal (3) einen Hauptkanal und damit verbundene Seitenkanäle aufweist.

7. System nach einem der vorhergehenden Ansprüche, wobei eine Breite der Schulter (6), gemessen in derselben Richtung wie die Kanalbreite (17), weniger als 30 mm beträgt.

8. System nach einem der vorhergehenden Ansprüche, wobei eine Breite des Anschlussbereichs (15), gemessen in derselben Richtung wie die Kanalbreite (17), mehr als 1 mm beträgt.

9. System nach einem der vorhergehenden Ansprüche, wobei die Schulter (6) und der Anschlussbereich (15) in derselben Ebene liegen.

10. Verfahren zur Verbindung von Karosserieelementen (1, 4) eines Kraftfahrzeugs, das Verfahren umfassend die Schritte:
Bereitstellen eines ersten Karosserieelementes (1), welches zumindest einen Kanal (3) an einer Oberfläche des ersten Karosserieelementes (1) hat, wobei die Oberfläche des ersten Karosserieelementes (1) neben dem Kanal (3) eine Schulter (6) bildet;
Bereitstellen eines zweiten Karosserieelementes (4);
Anordnen des ersten Karosserieelementes (1) und des zweiten Karosserieelementes (4) derart, dass zwischen Kanal (3) und Schulter (6) des ersten Karosserieelementes (1) und dem zweiten Karosserieelement (4) ein offener Hohlraum gebildet wird;
Einbringen eines Klebstoffes (8) in den Kanal (3); und
Ausbreiten des Klebstoffes (8) zumindest teilweise im Kanal (3) und zumindest teilweise auf der Schulter (6) zur Verklebung des ersten Karosserieelementes (1) mit dem zweiten Karosserieelement (4), **dadurch gekennzeichnet, dass** die Ausbreitung des Klebstoffes (8) auf der Schulter (6) durch eine zumindest teilweise Verfestigung des Klebstoffes (8) auf der Schulter (6) gestoppt wird.

11. Verfahren nach Anspruch 10, wobei der Klebstoff (8) beim Einbringen in den Kanal (3) durch eine Pumpe (25) aus einem Klebstofftank (24) gefördert wird und/oder
wobei der Klebstoff (8) beim Einbringen in den Kanal (3) durch eine Einfüllöffnung (2) im zweiten Karosserieelement (4) gefördert wird.

12. Verfahren nach einem der Ansprüche 10 oder 11, wobei das Verfahren den Schritt umfasst: Härten des Klebstoffes (8) durch eine Anwendung einer Temperatur von zumindest 120°C.

13. Verfahren nach einem der Ansprüche 10 bis 12, wobei das Verfahren mit Elementen des Systems nach einem der Ansprüche 1 bis 9 durchgeführt wird.

## Claims

1. System of connected body elements (1, 4) for a motor vehicle, the system comprising:
a first body element (1) which has at least one channel (3) on a surface of the body element (1), wherein a shoulder (6) is formed next to the channel (3);
a second body element (4);
an adhesive (8) which is arranged at least partially in the channel (3) and at least partially on the shoulder (6) and adhesively bonds the first body element (1) to the second body element (4);
wherein a connection region (15), directly adjoining the shoulder (6), of the surface of the first body element (1) is free from adhesive (8), wherein a first space between the shoulder (6) and the second body element (4), and a second space between the connection region (15) and the second body element (4), are open towards each other;
**characterized in that** a distance (9) between the shoulder (6) and the second body element (4) is between 0.5 and 4 mm.

2. System according to Claim 1, wherein the first body element (1) is a profile, a casting or a panel-shaped element, and wherein the second body element (4) is a profile, a casting or a panel-shaped element.

3. System according to Claim 1 or 2, wherein the first body element (1) and/or the second body element (4) consist at least partially of metal, plastic or fiber-reinforced plastic.

4. System according to any of the preceding claims, wherein a channel width (17) is between 5 and 300 mm, and/or wherein a channel depth (18) is between 0.5 and 10 mm, and/or wherein a channel length is between 50 and 500 mm.

5. System according to any of the preceding claims, wherein the channel (3) runs completely around the first body element (1) and is thus closed in itself.

6. System according to any of the preceding claims, wherein the channel (3) has branches and/or wherein the channel (3) comprises a main channel and side channels connected thereto.

7. System according to any of the preceding claims, wherein a width of the shoulder (6), measured in the same direction as the channel width (17), is less than 30 mm.

8. System according to any of the preceding claims, wherein a width of the connection region (15), measured in the same direction as the channel width (17), is more than 1 mm.

9. System according to any of the preceding claims, wherein the shoulder (6) and the connection region (15) lie in the same plane.

10. Method for connecting body elements (1, 4) of a motor vehicle, the method comprising the steps:
provision of a first body element (1) which has at least one channel (3) on a surface of the first body element (1), wherein the surface of the first body element (1) forms a shoulder (6) next to the channel (3) ;
provision of a second body element (4);
arrangement of the first body element (1) and the second body element (4) such that an open cavity is formed between the channel (3) and the shoulder (6) of the first body element (1) and the second body element (4) ;
introduction of an adhesive (8) into the channel (3); and
spreading of the adhesive (8) at least partly in the channel (3) and at least partly on the shoulder (6) for bonding the first body element (1) to the second body element (4), **characterized in that** the spreading of the adhesive (8) on the shoulder (6) is stopped by an at least partial hardening of the adhesive (8) on the shoulder (6).

11. Method according to Claim 10, wherein on introduction into the channel (3), the adhesive (8) is conveyed from an adhesive tank (24) by a pump (25), and/or
wherein on introduction into the channel (3), the adhesive (8) is conveyed through a filling opening (2) in the second body element (4).

12. Method according to either of Claims 10 and 11, wherein the method comprises the step: hardening of the adhesive (8) by application of a temperature of at least 120°C.

13. Method according to any of Claims 10 to 12, wherein the method is carried out with elements of the system according to any of Claims 1 to 9.

## Revendications

1. Système d'éléments de carrosserie connectés (1, 4) pour un véhicule automobile, le système comprenant :
un premier élément de carrosserie (1), qui a au moins un canal (3) au niveau d'une surface de l'élément de carrosserie (1), un épaulement (6) étant formé à côté du canal (3) ;
un deuxième élément de carrosserie (4) ;
un adhésif (8), qui est agencé au moins partiellement dans le canal (3) et au moins partiellement sur l'épaulement (6) et colle le premier élément de carrosserie (1) avec le deuxième élément de carrosserie (4) ;
une zone de raccordement (15), directement attenante à l'épaulement (6), de la surface du premier élément de carrosserie (1) étant exempte d'adhésif (8), un premier espace entre l'épaulement (6) et le deuxième élément de carrosserie (4) et un deuxième espace entre la zone de raccordement (15) et le deuxième élément de carrosserie (4) étant ouverts l'un vers l'autre ;
**caractérisé en ce qu'**un écart (9) entre l'épaulement (6) et le deuxième élément de carrosserie (4) est compris entre 0,5 et 4 mm.

2. Système selon la revendication 1, dans lequel le premier élément de carrosserie (1) est un profilé, une pièce moulée ou un élément en forme de tôle, et dans lequel le deuxième élément de carrosserie (4) est un profilé, une pièce moulée ou un élément en forme de tôle.

3. Système selon la revendication 1 ou 2, dans lequel le premier élément de carrosserie (1) et/ou le deuxième élément de carrosserie (4) sont au moins partiellement constitués de métal, de matière plastique ou de matière plastique renforcée par des fibres.

4. Système selon l'une quelconque des revendications précédentes, dans lequel une largeur de canal (17) est comprise entre 5 et 300 mm et/ou dans lequel une profondeur de canal (18) est comprise entre 0,5 et 10 mm et/ou dans lequel une longueur de canal est comprise entre 50 et 500 mm.

5. Système selon l'une quelconque des revendications précédentes, dans lequel le canal (3) entoure entièrement le premier élément de carrosserie (1) et est ainsi fermé sur lui-même.

6. Système selon l'une quelconque des revendications précédentes, dans lequel le canal (3) comprend des ramifications et/ou dans lequel le canal (3) comprend un canal principal et des canaux secondaires connectés à celui-ci.

7. Système selon l'une quelconque des revendications précédentes, dans lequel une largeur de l'épaulement (6), mesurée dans la même direction que la largeur de canal (17), est de moins de 30 mm.

8. Système selon l'une quelconque des revendications précédentes, dans lequel une largeur de la zone de raccordement (15), mesurée dans la même direction que la largeur de canal (17), est de plus de 1 mm.

9. Système selon l'une quelconque des revendications précédentes, dans lequel l'épaulement (6) et la zone de raccordement (15) sont situés dans le même plan.

10. Procédé de connexion d'éléments de carrosserie (1, 4) d'un véhicule automobile, le procédé comprenant les étapes suivantes :
la fourniture d'un premier élément de carrosserie (1), qui a au moins un canal (3) au niveau d'une surface du premier élément de carrosserie (1), la surface du premier élément de carrosserie (1) formant un épaulement (6) à côté du canal (3) ;
la fourniture d'un deuxième élément de carrosserie (4) ;
l'agencement du premier élément de carrosserie (1) et du deuxième élément de carrosserie (4) de telle sorte qu'un espace vide ouvert soit formé entre le canal (3) et l'épaulement (6) du premier élément de carrosserie (1) et le deuxième élément de carrosserie (4) ;
l'introduction d'un adhésif (8) dans le canal (3) ; et
l'étalement de l'adhésif (8) au moins partiellement dans le canal (3) et au moins partiellement sur l'épaulement (6) pour coller le premier élément de carrosserie (1) avec le deuxième élément de carrosserie (4), **caractérisé en ce que** l'étalement de l'adhésif (8) sur l'épaulement (6) est arrêté par une solidification au moins partielle de l'adhésif (8) sur l'épaulement (6).

11. Procédé selon la revendication 10, dans lequel l'adhésif (8) est transporté par une pompe (25) à partir d'un réservoir d'adhésif (24) lors de l'introduction dans le canal (3) et/ou dans lequel l'adhésif (8) est transporté par une ouverture de remplissage (2) dans le deuxième élément de carrosserie (4) lors de l'introduction dans le canal (3).

12. Procédé selon l'une quelconque des revendications 10 ou 11, dans lequel le procédé comprend l'étape suivante : le durcissement de l'adhésif (8) par une application d'une température d'au moins 120 °C.

13. Procédé selon l'une quelconque des revendications 10 à 12, dans lequel le procédé est réalisé avec des éléments du système selon l'une quelconque des revendications 1 à 9.
